(19) Europäisches Patentamt / European Patent Office / Office européen des brevets

(11) **EP 2 123 614 A2**

(12) **EUROPEAN PATENT APPLICATION**

(43) Date of publication:
25.11.2009 Bulletin 2009/48

(51) Int Cl.:
*C04B 35/18* (2006.01)   *C04B 38/00* (2006.01)

(21) Application number: 09006084.9

(22) Date of filing: 04.05.2009

(84) Designated Contracting States:
AT BE BG CH CY CZ DE DK EE ES FI FR GB GR
HR HU IE IS IT LI LT LU LV MC MK MT NL NO PL
PT RO SE SI SK TR

(30) Priority: 20.05.2008 PCT/JP2008/059273

(71) Applicant: IBIDEN CO., LTD.
Ogaki-shi
Gifu 503-8604 (JP)

(72) Inventors:
• **Ohno, Kazushige**
Ibi-Gun
Gifu 501-0695 (JP)

• **Kunieda, Masafumi**
Ibi-Gun
Gifu 501-0695 (JP)
• **Ido, Takahiko**
Ibi-Gun
Gifu 501-0695 (JP)

(74) Representative: **HOFFMANN EITLE**
**Patent- und Rechtsanwälte**
**Arabellastrasse 4**
**81925 München (DE)**

(54) **Honeycomb structure**

(57)   A honeycomb structure includes a honeycomb unit containing a zeolite and an inorganic binder and having plural separating walls disposed in the longitudinal direction of the honeycomb unit, defining plural through-holes separated by the separating walls. The zeolite includes a first zeolite ion-exchanged with one or more kinds of metal selected from the group consisting of Cu, Mn, Ag, and V, and a second zeolite ion-exchanged with one or more kinds of metal selected from the group consisting of Fe, Ti, and Co. The ratio of the first zeolite by weight to a total weight of the first and second zeolites is greater at a center of the separating wall than at a surface thereof. The ratio of the second zeolite by weight to the total weight of the first and second zeolites is greater at the surface of the separating wall than at the center thereof.

EP 2 123 614 A2

**Description**

BACKGROUND OF THE INVENTION

1. Field of the Invention

The present invention relates to honeycomb structures.

2. Description of the Related Art

As a conventional system for converting automotive exhaust gases, a selective catalytic reduction (SCR) system is known in which NOx is reduced to nitrogen and water using ammonia through the following reactions:

$$4\,NO + 4\,NH_3 + O_2 \rightarrow 4\,N_2 + 6\,H_2O$$

$$6\,NO_2 + 8\,NH_3 \rightarrow 7\,N_2 + 12\,H_2O$$

$$NO + NO_2 + 2\,NH_3 \rightarrow 2\,N_2 + 3\,H_2O$$

As a material for adsorbing ammonia in an SCR system, zeolite is known.

Japanese Laid-Open Patent Application No. 9-103653 discloses a method for converting NOx into innocuous products. The method involves providing an iron-ZSM-5 monolithic structure zeolite having a silica to alumina molar ratio of at least about 10, wherein the iron content is about 1% to 5% by weight, and contacting the zeolite with a NOx-containing workstream in the presence of ammonia at a temperature of at least about 200°C.

WO/2006/137149A1 discloses a honeycomb structure comprising honeycomb units that contain inorganic particles, inorganic fibers, and/or whiskers, wherein the inorganic particles include one or more kinds of material selected from the group consisting of alumina, silica, zirconia, titania, ceria, mullite, and zeolite.

However, when a honeycomb structure having the Fe-ion-exchanged zeolite as a main material is used in an SCR system, the conversion rate of the SCR system is lower than an expected NOx conversion rate based on the amount of zeolite contained in the honeycomb structure. This is believed due to a temperature difference between a surface portion and a central portion of the separating wall of the honeycomb structure which is caused when the exhaust gas flows through the honeycomb structure. Namely, the temperature at the central portion of the separating wall becomes relatively low, thus forming a low-temperature region where the Fe-ion-exchanged zeolite cannot exhibit sufficient NOx converting performance.

SUMMARY OF THE INVENTION

It is a general object of the present invention to provide a honeycomb structure in which the aforementioned problem is eliminated.

A more specific object is to provide a honeycomb structure capable of improving the NOx conversion rate in a wide range of temperatures in an SCR system.

According to one aspect of the present invention, a honeycomb structure comprises a honeycomb unit containing zeolite and an inorganic binder and having plural separating walls disposed in the longitudinal direction of the honeycomb unit, thus defining plural through-holes separated by the separating walls.

The zeolite includes a first zeolite ion-exchanged with one or more kinds of metal selected from the group consisting of Cu, Mn, Ag, and V, and a second zeolite ion-exchanged with one or more kinds of metal selected from the group consisting of Fe, Ti, and Co.

A ratio of the first zeolite by weight to a total weight of the first zeolite and the second zeolite is greater at a center of the separating wall than at a surface of the separating wall. A ratio of the second zeolite by weight to the total weight of the first and the second zeolites is greater at the surface of the separating wall than at the center of the separating wall.

In a preferred embodiment, the ratio of the first zeolite by weight to the total weight of the first and the second zeolites at the center of the separating wall is 0.90 or more and 1.00 or less.

In another preferred embodiment, the ratio of the second zeolite by weight to the total weight of the first and the second zeolites at the surface of the separating wall is 0.90 or more and 1.00 or less.

Preferably, the honeycomb unit has a zeolite content per apparent volume of 230 g/L or more and 270 g/L or less. Preferably, each of the first and the second zeolites may include one or more kinds of zeolite selected from the group consisting of zeolite β, zeolite Y, ferrierite, ZSM-5 zeolite, mordenite, faujasite, zeolite A, and zeolite L.

In another preferred embodiment, each of the first and the second zeolites has a silica to alumina molar ratio of 30 or more and 50 or less. Preferably, each of the first and the second zeolites may include secondary particles having an average particle size of 0.5 $\mu$m or more and 10 $\mu$m or less.

In a preferred embodiment, the honeycomb unit further contains inorganic particles other than the zeolites. Preferably, the inorganic particles other than the zeolites may include one or more kinds of material selected from the group consisting of alumina, silica, titania, zirconia, ceria, mullite, and their precursors.

The inorganic binder may preferably include a solid content contained in one or more kinds of material selected from the group consisting of alumina sol, silica sol, titania sol, liquid glass, sepiolite, and attapulgite.

Preferably, the honeycomb unit may further include inorganic fibers. The inorganic fibers may preferably include one or more kinds of material selected from the group consisting of alumina, silica, silicon carbide, silica alumina, glass, potassium titanate, and aluminum borate.

In another preferred embodiment, the honeycomb unit has a porosity of 25% or more and 40% or less. Preferably, the honeycomb unit may have an opening ratio of 50% or more and 65% or less in a cross section perpendicular to the longitudinal direction of the honeycomb unit.

In another preferred embodiment, a plurality of the honeycomb units are bonded by interposing a bonding layer.

In accordance with an embodiment of the present invention, a honeycomb structure can be provided whereby, in an SCR system, improved NOx conversion rates can be obtained in a wide temperature range.

BRIEF DESCRIPTION OF THE DRAWINGS

FIG. 1A shows a perspective view of a honeycomb structure according to an embodiment of the present invention;
FIG. 1B shows a schematic cross section of the honeycomb structure of FIG. 1A taken in the longitudinal direction thereof;
FIG. 2A shows a perspective view of a honeycomb structure according to other embodiment of the present invention; and
FIG. 2B shows a perspective view of a honeycomb unit in the honeycomb structure shown in FIG. 2A.

DETAILED DESCRIPTION OF THE PREFERRED EMBODIMENTS

Hereafter, preferred embodiments of the present invention are described with reference to the drawings.

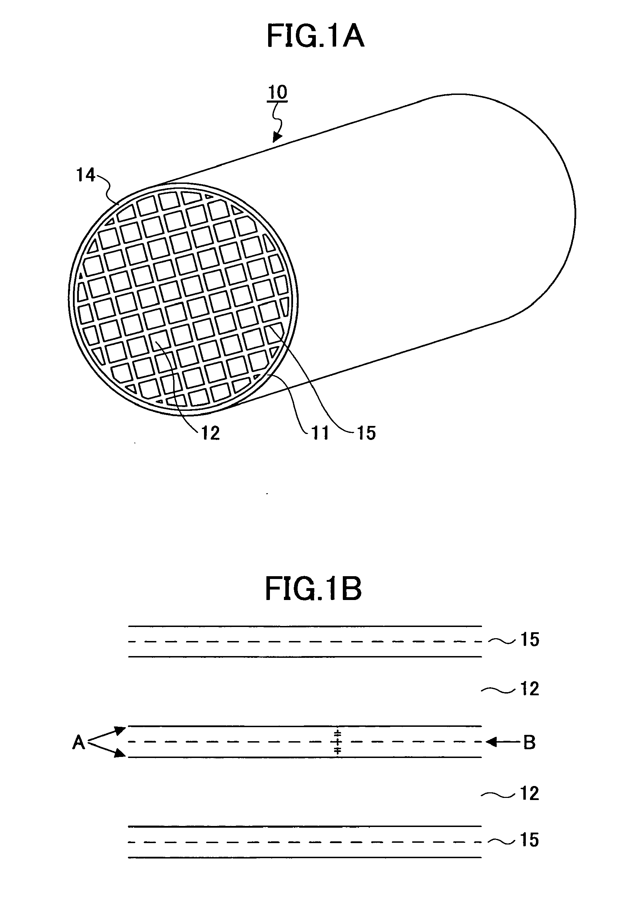

With reference to FIGs. 1A and 1B, a honeycomb structure according to an embodiment of the present invention is described. FIG. 1A shows a perspective view of a honeycomb structure 10. FIG. 1B shows a schematic cross section of the honeycomb structure 10 taken in the longitudinal direction thereof.

As shown in FIG. 1A, the honeycomb structure 10 comprises a single honeycomb unit 11 with a peripheral outer surface thereof coated with an outer coating layer 14. The honeycomb unit 11 contains zeolite and an inorganic binder, and includes plural separating walls 15 formed in the longitudinal direction thereof, defining plural through-holes 12 separated by the separating walls 15.

The zeolite in the honeycomb unit 11 includes a zeolite ion-exchanged with one or more kinds of metal selected from the group consisting of Cu, Mn, Ag, and V (hereafter referred to as a first zeolite), and a zeolite ion-exchanged with one or more kinds of metal selected from the group consisting of Fe, Ti, and Co (hereafter referred to as a second zeolite). The zeolite may further include a zeolite that is not ion-exchanged, or a zeolite ion-exchanged with a metal other than those mentioned above.

With reference to FIG. 1B, the ratio of the first zeolite by weight to a total weight of the first and the second zeolites is greater at a center B of the separating wall 15 than at a surface A thereof. Further, the ratio of the second zeolite by weight to the total weight of the first and the second zeolites is greater at the surface A of the separating wall 15 than at the center B thereof.

The "surface" of the separating wall is herein intended to refer to a surface region having an unspecified thickness. The "center" of the separating wall is herein intended to refer to a center region having an unspecified thickness.

The present inventors have found that a high NOx conversion performance can be obtained in a wide temperature range by placing the first zeolite in the central portion of the separating wall of the honeycomb structure, while placing the second zeolite in the surface portion of the separating wall. This is believed due to the fact that the first zeolite, which is ion-exchanged with one or more kinds of metal selected from the group consisting of Cu, Mn, Ag, and V, provides higher NOx conversion performance in a low-temperature region (such as at 150°C to 250°C) than the second zeolite, which is ion-exchanged with one or more kinds of metal selected from the group consisting of Fe, Ti, and Co.

When the honeycomb structure 10 is applied in an SCR system (such as an SCR system in which NOx is reduced to nitrogen and water using ammonia), the surface A of the separating wall 15 tends to experience a relatively high temperature due to the flow of the exhaust gas, while the center B of the separating wall 15 tends to experience a relatively low temperature. Thus, the zeolites placed in the honeycomb unit 11 in accordance with the present embodiment can be effectively utilized for NOx conversion. As a result, improved NOx conversion rates can be obtained in a wide temperature range (such as between 200°C and 500°C) of the honeycomb structure 10.

In the honeycomb structure 10, the ratio of the first zeolite by weight to the total weight of the first and the second zeolites may be either constant or may vary continuously or discontinuously between the surface A and the center B of the separating wall 15.

As mentioned above, the temperature tends to become higher near the surface A of the separating wall 15 due to the flow of exhaust gas. Thus, the ratio of the second zeolite is preferably increased as the zeolites are located closer to the surface A of the separating wall 15.

Conversely, the temperature tends to be lower near the center B of the separating wall 15 because of its distance from the gas flow. Thus, the ratio of the first zeolite is increased as the zeolites are located closer to the center B of the separating wall 15.

Preferably, in the surface A of the separating wall 15, the ratio of the second zeolite, which is ion-exchanged with one or more kinds of metal selected from the group consisting of Fe, Ti, and Co, by weight to the total weight of the first and the second zeolites is 0.90 to 1.00. When this weight ratio is less than 0.90, the zeolites in the surface A of the separating wall 15 may not be effectively utilized for NOx conversion.

Preferably, at the center B of the separating wall 15, the ratio of the first zeolite, which is ion-exchanged with one or more kinds of metal selected from the group consisting of Cu, Mn, Ag, and V, by weight to the total weight of the first and the second zeolites is 0.90 to 1.00. When this weight ratio is less than 0.90, the zeolites at the center B of the separating wall 15 may not be effectively used for NOx conversion.

In the honeycomb unit 11, the zeolite content per apparent volume is 230 g/L to 270 g/L. When the zeolite content per apparent volume of the honeycomb unit 11 is less than 230 g/L, the apparent volume of the honeycomb unit 11 may have to be increased in order to obtain a sufficient NOx conversion rate. When the zeolite content exceeds 270 g/L, the strength of the honeycomb unit 11 may be insufficient. The term "zeolite" is herein intended to refer to the entire zeolites, i.e., both zeolites that are ion-exchanged and zeolites that are not ion-exchanged.

The "apparent volume" of the honeycomb unit is herein intended to refer to the volume of the honeycomb unit including the through-holes.

Preferably, in each of the first and the second zeolites, the ion-exchanged amount is 1.0 wt% to 10.0 wt% and more preferably 1.0 wt% to 5.0 wt%. When the ion-exchanged amount is less than 1.0 wt%, a sufficient change in ammonia-adsorbing capability caused by ion exchange may not be obtained. When the ion-exchanged amount exceeds 10.0 wt%, structural instability may be caused upon application of heat. When ion-exchanging a zeolite, the zeolite may be immersed in an aqueous solution containing a cation.

The kind of the zeolites is not particularly limited; examples are zeolite β, ZSM-5, mordenite, faujasite, zeolite A, and zeolite L, of which two or more kinds may be used in combination. The zeolites herein refer to the entire zeolites.

Preferably, the zeolites have a silica to alumina molar ratio of 30 to 50. The zeolites herein refer to the entire zeolites.

Preferably, the zeolites contain secondary particles of which an average particle size is preferably 0.5 μm to 10 μm. When the average particle size of the secondary particles of the zeolites is less than 0.5 μm, a large amount of an inorganic binder needs to be added, resulting in difficulty in extrusion molding. When the average particle size of the secondary particles of the zeolites exceeds 10 μm, the specific surface area of the zeolites decreases, resulting in a decrease in NOx conversion rate. The zeolites herein refer to the entire zeolites.

The honeycomb unit 11 may further include inorganic particles other than the zeolites for strength improving purposes. The inorganic particles other than the zeolites are not particularly limited. Examples are alumina, silica, titania, zirconia, ceria, mullite, and their precursors, of which two or more may be used in combination. Among those mentioned above, alumina and zirconia are particularly preferable. The zeolites herein refer to the entire zeolites.

Preferably, the inorganic particles other than the zeolites have an average particle size of 0.5 μm to 10 μm. When the average particle size of inorganic particles other than the zeolites is less than 0.5 μm, a large amount of an inorganic binder needs to be added, resulting in difficulty in extrusion molding. When the average particle size of inorganic particles other than the zeolites exceeds 10 μm, a sufficient strength of the honeycomb unit 11 may not be obtained. The inorganic particles other than the zeolites may include secondary particles.

Preferably, the ratio of the average particle size of the secondary particles of the inorganic particles other than the zeolites to the average particle size of the secondary particles of the zeolites is 1.0 or less and more preferably 0.1 to 1.0. When the ratio is more than 1.0, a sufficient strength of the honeycomb unit 11 may not be obtained. The zeolites herein refer to the entire zeolites.

Preferably, in the honeycomb unit 11, the content of the inorganic particles other than the zeolites is 3 wt% to 30 wt% and more preferably 5 wt% to 20 wt%. When the content is less than 3 wt%, a sufficient strength of the honeycomb unit 11 may not be obtained. When the content of the inorganic particles other than the zeolites exceeds 30 wt%, the zeolite content in the honeycomb unit 11 decreases, possibly resulting in a decrease in NOx conversion rate.

The inorganic binder is not particularly limited. Examples are solid contents in an alumina sol, a silica sol, a titania sol, a liquid glass, sepiolite, and attapulgite, of which two or more may be used in combination.

In the honeycomb unit 11, the inorganic binder content as a solids content is preferably 5 wt% to 30 wt% and more preferably 10 wt% to 20 wt%. When the inorganic binder content as a solids content is less than 5 wt%, the strength of the honeycomb unit 11 may decrease. When the inorganic binder content as a solids content is more than 30 wt%, molding of the honeycomb unit may become difficult.

The honeycomb unit 11 may further preferably contain inorganic fibers for strength improving purposes. The inorganic fibers are not particularly limited as long as they contribute to the improvement in strength of the honeycomb unit 11. Examples are alumina, silica, silicon carbide, silica alumina, glass, potassium titanate, aluminum borate and the like, of which two or more may be used in combination.

The inorganic fibers preferably have an aspect ratio of 2 to 1000, more preferably 5 to 800, and even more preferably 10 to 500. When the aspect ratio is less than two, a sufficient strength of the honeycomb unit 11 may not be obtained. When the aspect ratio exceeds 1000, clogging or the like may develop in the die during extrusion molding or the like of the honeycomb unit, or the inorganic fibers may break during molding, thereby reducing the strength of the honeycomb unit 11.

In the honeycomb unit 11, the inorganic fibers content is preferably 3 wt% to 50 wt%, more preferably 3 wt% to 30 wt%, and even more preferably 5 wt% to 20 wt%. When the inorganic fibers content is less than 3 wt%, a sufficient strength of the honeycomb unit 11 may not be obtained. When the inorganic fibers content exceeds 50 wt%, the zeolite content in the honeycomb unit 11 may decrease so much that the NOx conversion rate may decrease.

Preferably, the honeycomb unit 11 has a porosity of 25% to 40%. When the porosity is less than 25%, exhaust gas may not be able to penetrate the separating wall 15 easily, so that the zeolites cannot be effectively used for NOx conversion. When the porosity of the honeycomb unit 11 exceeds 40%, a sufficient strength of the honeycomb unit 11 may not be obtained.

Preferably, the honeycomb unit 11 has an opening ratio of 50% to 65% in a cross section perpendicular to the longitudinal direction thereof. When the opening ratio is less than 50%, the zeolites may not be effectively used for NOx conversion. When the opening ratio exceeds 65%, a sufficient strength of the honeycomb unit 11 may not be obtained.

In the honeycomb unit 11, preferably the density of the through-holes 12 in a cross section perpendicular to the longitudinal direction of the honeycomb unit 11 is 31 to 124 holes/cm$^2$. When the density of the through-holes 12 is less than 31 holes/cm$^2$, it may become difficult for the exhaust gas to come into contact with the zeolites, resulting in a decrease in NOx conversion performance of the honeycomb unit 11. When the density exceeds 124 holes/cm$^2$, pressure loss of the honeycomb unit 11 may increase.

Preferably, the separating wall 15 of the honeycomb unit 11 has a thickness of 0.10 mm to 0.50 mm and more preferably 0.15 mm to 0.35 mm. When the thickness of the separating wall 15 is less than 0.10 mm, a sufficient strength of the honeycomb unit 11 may not be obtained. When the thickness exceeds 0.50 mm, it may become difficult for the exhaust gas to penetrate the separating wall 15, so that the zeolites cannot be effectively used for NOx conversion.

The outer coating layer 14 preferably has a thickness of 0.1 mm to 2 mm. When the thickness of the outer coating layer 14 is less than 0.1 mm, sufficient strength of the honeycomb structure 10 may not be obtained. When the thickness of the outer coating layer 14 exceeds 2 mm, the zeolite content per unit volume of the honeycomb unit 11 may decrease so much that the NOx conversion performance of the honeycomb structure 10 may deteriorate.

The honeycomb structure 10 in accordance with the present embodiment is cylindrical in shape. However, the shape of the honeycomb structure 10 is not particularly limited. For example, the honeycomb structure 10 may be polygonal-pillar shaped, cylindroid-shaped or the like. Further, while the through-holes 12 in accordance with the present embodiment are rectangular-pillar shaped, the shape of the through-hole is not particularly limited. For example, the through-holes 12 may be triangular-pillar shaped, hexagonal-pillar shaped or the like.

Hereafter, a method of manufacturing the honeycomb structure 10 is described. First, there is prepared a raw material paste containing the first zeolite and an inorganic binder. The first zeolite is ion-exchanged with one or more kinds of metal selected from the group consisting of Cu, Mn, Ag, and V. The raw material paste may further contain the second zeolite, inorganic particles other than zeolite, and inorganic fibers or the like, as needed. The second zeolite is ion-exchanged with one or more kinds of metal selected from the group consisting of Fe, Ti, and Co.

The raw material paste is then molded by extrusion molding or the like to obtain a raw cylindrical honeycomb molded body having plural separating walls 15 that extend in the longitudinal direction of the molded body thus defining the through-holes. From the raw cylindrical honeycomb molded body, a cylindrical honeycomb unit 11 having a sufficient strength can be obtained even when the firing temperature is low.

The inorganic binder is added in the raw material paste in the preparation of an alumina sol, a silica sol, a titania sol, a liquid glass, sepiolite, or attapulgite or the like, of which two or more may be used in combination.

The raw material paste may further contain an organic binder, a dispersion medium, a forming aid or the like as needed.

The organic binder is not particularly limited. Examples are methylcellulose, carboxymethylcellulose, hydroxyethyl cellulose, polyethyleneglycol, phenol resin, epoxy resin and the like, of which two or more may be used in combination. Preferably, the amount of the organic binder added is 1% to 10% of the total weight of the zeolites, the inorganic particles other than the zeolites, the inorganic fibers, and the inorganic binder. The zeolites herein refer to the entire zeolites.

The dispersion medium is not particularly limited. Examples are water, an organic solvent such as benzene, alcohol such as methanol, and the like, of which two or more may be used in combination.

The forming aid is not particularly limited. Examples are ethylene glycol, dextrin, aliphatic acid, aliphatic acid soap, polyalcohol, and the like, of which two or more may be used in combination.

When preparing the raw material paste, the raw material paste is preferably mixed and kneaded using a mixer, an attritor, a kneader or the like, for example.

The obtained honeycomb molded body is then dried using a drying apparatus, such as a microwave drying apparatus, a hot-air drying apparatus, a dielectric drying apparatus, a reduced-pressure drying apparatus, a vacuum drying apparatus, or a freeze-drying apparatus.

The dried honeycomb molded body is further degreased under conditions that are not particularly limited and may be selected appropriately depending on the kind or amount of organic matter contained in the molded body. Preferably, the honeycomb molded body is degreased at 400°C for two hours.

The degreased honeycomb molded body is then fired, obtaining the cylindrical honeycomb unit 11. The firing temperature is preferably 600°C to 1200°C and more preferably 600°C to 1000°C. When the firing temperature is less than 600°C, sintering may not progress and the strength of the honeycomb unit 11 may decrease. When the firing temperature exceeds 1200°C, sintering may progress so much that the reactive sites in the zeolite in the honeycomb unit 11 may decrease.

Thereafter, the outer peripheral surface of the cylindrical honeycomb unit 11 is coated with an outer coating layer paste. The outer coating layer paste is not particularly limited. Examples are a mixture of an inorganic binder and inorganic particles, a mixture of an inorganic binder and inorganic fibers, and a mixture of an inorganic binder, inorganic particles, inorganic fibers, and the like.

The outer coating layer paste may contain an organic binder that is not particularly limited. Examples are polyvinyl alcohol, methylcellulose, ethylcellulose, and carboxymethylcellulose, of which two or more may be used in combination.

The honeycomb unit 11 coated with the outer coating layer paste is then dried and solidified, obtaining a cylindrical honeycomb structure. The cylindrical honeycomb structure is preferably degreased when the outer coating layer paste contains the organic binder. The degreasing condition may be appropriately selected depending on the kind or amount of organic matter contained in the paste. Preferably, degreasing is performed at 700°C for 20 minutes.

The surfaces of the separating walls 15 of the resultant honeycomb structure are then coated with a coating layer, thereby obtaining the honeycomb structure 10. The coating layer may be formed by impregnation. When the coating layer is formed, a dispersion liquid may be used. The dispersion liquid may contain the second zeolite and the inorganic binder. The dispersion liquid may further contain the first zeolite; the inorganic particles other than the zeolites, and the inorganic fibers, as needed.

The honeycomb structure 10 may also be manufactured by preparing the raw cylindrical honeycomb molded body by double extrusion molding of two kinds of raw material paste having different ratios of the first zeolite to the second zeolite.

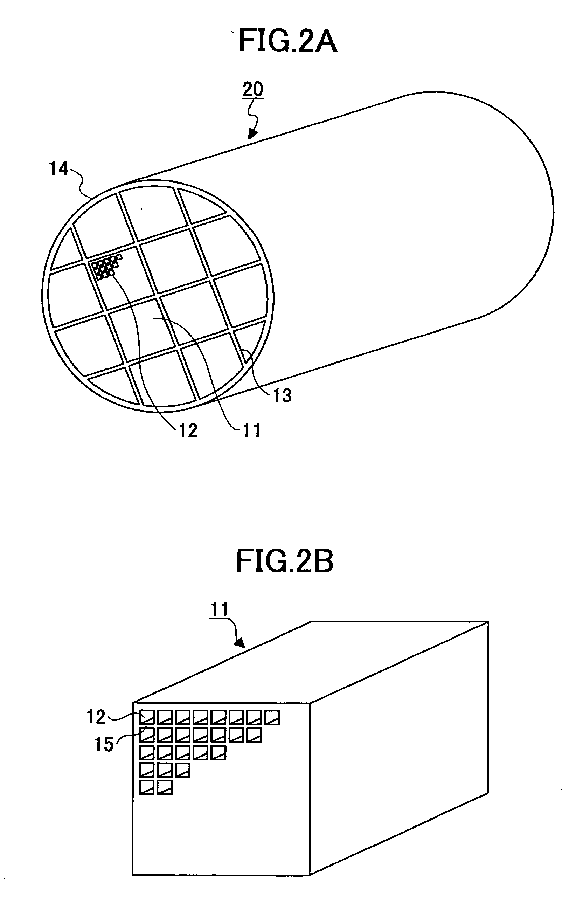

FIGs. 2A and 2B show a honeycomb structure 20 according to other embodiment of the present invention. The honeycomb structure 20 is similar to the honeycomb structure 10 of the foregoing embodiment, with the exception that a plurality of the honeycomb units 11 are joined by interposing bonding layers 13, each honeycomb unit 11 having the plural separating walls 15 that extend in the longitudinal direction of the honeycomb structure 20 thus defining the through-holes 12.

Preferably, the individual honeycomb unit 11 has a cross-sectional area of 5 cm$^2$ to 50 cm$^2$ in a cross section perpendicular to the longitudinal direction of the honeycomb unit 11. When the cross-sectional area of the honeycomb unit is less than 5 cm$^2$, the specific surface area of the honeycomb structure 20 decreases, and pressure loss may also increase. When the cross-sectional area of the honeycomb unit exceeds 50 cm$^2$, a sufficient strength against the thermal stress produced in the honeycomb unit 11 may not be obtained.

Preferably, the bonding layer 13 for bonding the honeycomb units 11 has a thickness of 0.5 mm to 2 mm. When the thickness of the bonding layer 13 is less than 0.5 mm, a sufficient bonding strength may not be obtained. When the thickness of the bonding layer 13 exceeds 2 mm, the specific surface area of the honeycomb structure 20 decreases, and pressure loss may also increase.

Although the honeycomb unit 11 in accordance with the present embodiment shown in FIG. 2B is rectangular-pillar shaped, the shape of the honeycomb unit 11 is not particularly limited. Preferably, the individual honeycomb units 11 have a shape that facilitates their joining, such as a hexagonal-pillar shape.

Hereafter, a method of manufacturing the honeycomb structure 20 is described. First, as in the case of the honeycomb structure 10 of the earlier embodiment, the rectangular-pillar shaped honeycomb unit 11 is manufactured. Then, the outer peripheral surface of the honeycomb unit 11 is coated with the bonding layer paste, and the individual honeycomb units 11 are successively joined. The joined honeycomb units 11 are then dried and solidified, obtaining a honeycomb unit assembly. Thereafter, the honeycomb unit assembly may be cut to a cylindrical shape and then polished. Alternatively, the honeycomb units 11 having sectoral or square cross sections may be joined to obtain the cylindrical honeycomb unit assembly.

The bonding layer paste is not particularly limited. Examples of the bonding layer paste include a mixture of an inorganic binder and inorganic particles; a mixture of an inorganic binder and inorganic fibers; and a mixture of an inorganic binder, inorganic particles, and inorganic fibers.

The bonding layer paste may also contain an organic binder. The organic binder may include but is not limited to polyvinyl alcohol, methylcellulose, ethylcellulose, and carboxymethylcellulose, of which two or more may be used in combination.

Thereafter, the outer peripheral surface of the cylindrical honeycomb unit assembly is coated with the outer coating layer paste. The outer coating layer paste is not particularly limited, and it may contain the same material as or a different material from the bonding layer paste. The outer coating layer paste may have the same composition as the bonding layer paste.

The honeycomb unit assembly thus coated with the outer coating layer paste is then dried and solidified, thereby obtaining a cylindrical honeycomb structure. Preferably, the cylindrical honeycomb structure is degreased when the bonding layer paste and/or the outer coating layer paste contains the organic binder. Degreasing conditions may be appropriately selected depending on the kind or amount of organic matter. Preferably, however, degreasing is performed at 700°C for 20 minutes.

The surfaces of the separating walls 15 of the obtained honeycomb structure are then coated with the coating layer in the same way as in the honeycomb structure 10, thereby obtaining the honeycomb structure 20.

Alternatively, the honeycomb structure 20 may be manufactured by preparing the raw rectangular-pillar shaped honeycomb unit 11 by double extrusion of two kinds of raw material paste having different ratios of the first zeolite, which is ion-exchanged with one or more kinds of metal selected from the group consisting of Cu, Mn, Ag, and V, to the second zeolite, which is ion-exchanged with one or more kinds of metal selected from the group consisting of Fe, Ti, and Co.

The outer coating layer may or may not be formed on the honeycomb structure according to an embodiment of the present invention.

Examples

Example 1

2600 g of zeolite β ion-exchanged with Cu by 3 wt% and having an average particle size of 2 μm, a silica to alumina ratio of 40, and a specific surface area of 110 $m^2/g$, 2600 g of alumina sol as an inorganic-binder-containing component having a solid content of 20 wt%, 780 g of alumina fibers as inorganic fibers having an average fiber diameter of 6 μm and an average fiber length of 100 μm, and 410 g of methylcellulose as an organic binder were mixed and kneaded, obtaining a raw material paste. The zeolite had been ion-exchanged with Cu by impregnating the zeolite particles with an aqueous solution of copper nitrate. The amount of ion-exchanged zeolite was determined by ICP emission spectrometry using the ICPS-8100 spectrometer from Shimadzu Corporation.

The raw material paste was then extrusion-molded by an extrusion molding machine, obtaining a raw cylindrical honeycomb molded body. The raw cylindrical honeycomb molded body was then dried using a microwave drying apparatus and a hot-air drying apparatus, followed by degreasing at 400°C for 2 hours. Thereafter, firing was performed at 700°C for 2 hours, thereby manufacturing a cylindrical honeycomb structure measuring 30 mm in diameter and 50 mm in length.

The resultant honeycomb structure was impregnated with a coating layer dispersion liquid with a solid content of 35 wt%. The coating layer dispersion liquid had dispersed therein 82.5 parts by weight of zeolite β ion-exchanged with Fe by 3 wt% and having an average particle size of 2 μm, a silica to alumina ratio of 40, and a specific surface area of 110 $m^2/g$; and 17.5 parts by weight of an alumina sol having a solid content of 20 wt%. Thereafter, the honeycomb structure was maintained at 600°C for 1 hour, thereby forming the coating layer on the separating walls of the honeycomb structure. The Fe-ion exchange had been performed by impregnating the zeolite particles with a solution of iron ammonium nitrate.

The obtained honeycomb structure had an opening ratio of 60% in a cross section perpendicular to the longitudinal direction thereof, a through-hole density of 93 holes/cm$^2$, a separating wall thickness of 0.10 mm, a zeolite content of 250 g/L per apparent volume, and a porosity of 30% (see Table 1).

The opening ratio was determined by calculating the area of the through-holes in a $10 \times 10$ cm area of the honeycomb structure using an optical microscope. The density of the through-holes was determined by measuring the number of the through-holes in a $10 \times 10$ cm area of the honeycomb structure using the optical microscope. For the thickness of the separating wall, an average value was obtained by measuring the thickness of the separating walls at five locations using the optical microscope. The porosity was determined by mercury intrusion technique.

<u>Examples 2 and 3</u>

Honeycomb structures according to Examples 2 and 3 were manufactured in the same way as for Example 1, followed by the formation of the coating layer on the separating walls. The exception from Example 1 was that the structure of the die of the extrusion molding machine was changed (see Table 1).

<u>Comparative Example 1</u>

2600 g of zeolite β ion-exchanged with Fe by 3 wt% and having an average particle size of 2 μm, a silica to alumina ratio of 40, and a specific surface area of 110 m$^2$/g, 2600 g of alumina sol with a solid content of 20 wt% as an inorganic-binder-containing component, 780 g of alumina fibers as inorganic fibers having an average fiber diameter of 6 μm and an average fiber length of 100 μm, and 410 g of methylcellulose as an organic binder were mixed and kneaded, obtaining a raw material paste. The raw material paste was then extrusion-molded with an extrusion molding machine, obtaining a raw honeycomb molded body. The honeycomb molded body was then dried with a microwave drying apparatus and a hot-air drying apparatus, followed by degreasing at 400°C for 2 hours. Firing was then performed at 700°C for 2 hours, thereby manufacturing a cylindrical honeycomb structure measuring 30 mm in diameter and 50 mm in length (see Table 1).

Table 1

| | Thickness of separating wall (mm) | Density of through-holes (/cm$^2$) | Opening ratio (%) | Porosity (%) | Cu ion-exchanged zeolite content (g/L) | Fe ion-exchanged zeolite content (g/L) | NOx conversion rate (%) | |
|---|---|---|---|---|---|---|---|---|
| | | | | | | | 200°C | 500°C |
| Ex.1 | 0.10 | 93 | 60 | 30 | 125 | 125 | 70 | 97 |
| Ex.2 | 0.12 | 62 | 60 | 30 | 125 | 125 | 70 | 97 |
| Ex.3 | 0.14 | 42 | 60 | 30 | 125 | 125 | 70 | 96 |
| Com.Ex. 1 | 0.25 | 62 | 60 | 30 | 0 | 250 | 45 | 98 |

<u>Measurement of NOx conversion rate</u>

Simulation gas at temperatures of 200°C and 500°C was caused to flow through the honeycomb structures according to Examples 1 to 3 and Comparative Example 1 at a space velocity (SV) of 35000/hr, and the amount of nitric oxide (NO) at the outlet of the honeycomb structure was measured, using the MEXA-7100D exhaust gas analyzer from HORIBA, Ltd. The NOx conversion rate (%) was measured (detection limit: 0.1 ppm) according to the following expression:

$$((\text{NO inflow amount} - \text{NO outflow amount}) / \text{NO inflow amount}) \times 100$$

The constituent components of the simulation gas were nitrogen (balance), carbon dioxide (5 % by volume), oxygen (14 % by volume), nitric oxide (350 ppm), ammonia (350 ppm), and water (5 % by volume). The result of measurement is shown in Table 1. It can be seen from Table 1 that the honeycomb structures of Examples 1 to 3 provide higher NOx conversion rates than the honeycomb structure of Comparative Example 1 at 200°C to 500°C.

Thus, improved NOx conversion rates can be obtained in a wide temperature range by the honeycomb structures according to the embodiments of the present invention, in which the ratio of the first zeolite by weight to the total weight of the first zeolite and the second zeolite is higher at the center of the separating wall than at the surface thereof, and the ratio of the second zeolite by weight to the total weight of the first and the second zeolites is higher at the surface of the separating wall than at the center of the separating wall.

Although this invention has been described in detail with reference to certain embodiments, variations and modifications exist within the scope and spirit of the invention as described and defined in the following claims.

**Claims**

1.   A honeycomb structure comprising a honeycomb unit containing zeolite and an inorganic binder and having plural separating walls disposed in the longitudinal direction of the honeycomb unit, thus defining plural through-holes separated by the separating walls,
     wherein the zeolite includes a first zeolite ion-exchanged with one or more kinds of metal selected from the group consisting of Cu, Mn, Ag, and V, and a second zeolite ion-exchanged with one or more kinds of metal selected from the group consisting of Fe, Ti, and Co,
     wherein a ratio of the first zeolite by weight to a total weight of the first zeolite and the second zeolite is greater at a center of the separating wall than at a surface of the separating wall, and
     wherein a ratio of the second zeolite by weight to the total weight of the first and the second zeolites is greater at the surface of the separating wall than at the center of the separating wall.

2.   The honeycomb structure according to claim 1, wherein the ratio of the first zeolite by weight to the total weight of the first and the second zeolites at the center of the separating wall is 0.90 or more and 1.00 or less.

3.   The honeycomb structure according to claim 1 or 2, wherein the ratio of the second zeolite by weight to the total weight of the first and the second zeolites at the surface of the separating wall is 0.90 or more and 1.00 or less.

4.   The honeycomb structure according to any one of claims 1 through 3,
     wherein the honeycomb unit has a zeolite content per apparent volume of 230 g/L or more and 270 g/L or less.

5.   The honeycomb structure according to any one of claims 1 through 4,
     wherein each of the first and the second zeolites includes one or more kinds of zeolite selected from the group consisting of zeolite β, zeolite Y , ferrierite, ZSM-5 zeolite, mordenite, faujasite, zeolite A, and zeolite L.

6.   The honeycomb structure according to any one of claims 1 through 5,
     wherein each of the first and the second zeolites has a silica to alumina molar ratio of 30 or more and 50 or less.

7.   The honeycomb structure according to any one of claims 1 through 6,
     wherein each of the first and the second zeolites include secondary particles having an average particle size of 0.5 $\mu$m or more and 10 $\mu$m or less.

8.   The honeycomb structure according to any one of claims 1 through 7,
     wherein the honeycomb unit further contains inorganic particles other than the zeolites.

9.   The honeycomb structure according to claim 8, wherein the inorganic particles other than the zeolites include one or more kinds of material selected from the group consisting of alumina, silica, titania, zirconia, ceria, mullite, and their precursors.

10.   The honeycomb structure according to any one of claims 1 through 9,
      wherein the inorganic binder includes a solid content contained in one or more kinds of material selected from the group consisting of alumina sol, silica sol, titania sol, liquid glass, sepiolite, and attapulgite.

11.   The honeycomb structure according to any one of claims 1 through 10, wherein the honeycomb unit further includes inorganic fibers.

12. The honeycomb structure according to claim 11, wherein the inorganic fibers include one or more kinds of material selected from the group consisting of alumina, silica, silicon carbide, silica alumina, glass, potassium titanate, and aluminum borate.

13. The honeycomb structure according to any one of claims 1 through 12,
wherein the honeycomb unit has a porosity of 25% or more and 40% or less.

14. The honeycomb structure according to any one of claims 1 through 13,
wherein the honeycomb unit has an opening ratio of 50% or more and 65% or less in a cross section perpendicular to the longitudinal direction of the honeycomb unit.

15. The honeycomb structure according to any one of claims 1 through 14,
wherein a plurality of the honeycomb units are bonded by interposing a bonding layer.

# FIG.1A

# FIG.1B

# FIG.2A

# FIG.2B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9103653 A
- WO 2006137149 A1